# FASCICULE DE BREVET EUROPEEN

(11) **EP 4 319 989 B1**
(45) Date de publication et mention de la délivrance du brevet: **22.01.2025**
(21) Numéro de dépôt: 22717640.1
(22) Date de dépôt: 28.03.2022
(51) Int. Cl.: B60C 11/03, B60C 11/12

(54) **PNEUMATIQUE POUR VÉHICULE AGRICOLE À USAGE MIXTE**
REIFEN FÜR EIN LANDWIRTSCHAFTLICHES NUTZFAHRZEUG MIT GEMISCHTER VERWENDUNG
TYRE FOR A MIXED-USE AGRICULTURAL VEHICLE

(30) Priorité: 09.04.2021 FR 2103624
(43) Date de publication de la demande: 14.02.2024
(73) Titulaire: COMPAGNIE GENERALE DES ETABLISSEMENTS MICHELIN, 63000 Clermont-Ferrand (FR)
(72) Inventeur: SEJALON, Olivier, 63040 CLERMONT-FERRAND Cedex 9 (FR)
(74) Mandataire: M.F.P. Michelin
(86) Numéro de dépôt international: PCT/FR2022/050574
(87) Numéro de publication internationale: WO 2022/214750

(56) Documents cités:
- WO-A1-00/13923
- WO-A1-2020/201028
- JP-A- 2000 094 907
- US-A- 5 127 455

## Description

La présente invention a pour objet un pneumatique pour véhicule agricole à usage mixte, c'est-à-dire à usage routier et en champ, tel qu'un tracteur agricole ou un véhicule agro-industriel, et concerne plus particulièrement sa bande de roulement.

Comme tout pneumatique, un pneumatique pour véhicule agricole comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté.

Dans ce qui suit, et par convention, les directions circonférentielle (ou longitudinale), axiale (ou transversale) et radiale désignent respectivement une direction tangente à la surface de roulement et orientée selon le sens de rotation du pneumatique, une direction parallèle à l'axe de rotation du pneumatique et une direction perpendiculaire à l'axe de rotation du pneumatique. Un plan radial (ou méridien) est défini par une direction radiale et la direction axiale, et contient l'axe de rotation du pneumatique. Un plan circonférentiel est défini par une direction radiale et une direction circonférentielle, et est donc perpendiculaire à l'axe de rotation du pneumatique. Le plan circonférentiel passant par le milieu de la bande de roulement est appelé plan circonférentiel médian ou plan équatorial.

La bande de roulement d'un pneumatique pour véhicule agricole comprend généralement une sculpture constituée par une pluralité d'éléments en relief s'étendant radialement vers l'extérieur à partir d'une surface portante jusqu'à la surface de roulement, et séparés les uns des autres par des creux.

Dans l'état de la technique, une bande de roulement pour véhicule agricole comprend usuellement des éléments de sculpture ayant la forme de barrettes. Une barrette a généralement une forme allongée globalement parallélépipédique, continue ou discontinue, et constituée d'au moins une portion rectiligne ou curviligne. Une barrette est séparée des barrettes adjacentes par des creux ou sillons. Une barrette s'étend axialement à partir d'une zone médiane de la bande de roulement jusqu'à ses extrémités axiales ou épaules. Une barrette comprend une face de contact, positionnée dans la surface de roulement et destinée à entrer totalement en contact avec le sol, une face d'attaque, coupant la surface de roulement et dont l'arête d'intersection avec celle-ci est destinée à entrer en contact en premier avec le sol, une face de fuite, coupant la surface de roulement et dont l'arête d'intersection avec celle-ci est destinée à entrer en contact en dernier avec le sol, et deux faces latérales.

Les barrettes sont réparties circonférentiellement selon un pas constant ou variable, mesuré entre les lignes moyennes respectives de deux barrettes consécutives, et sont généralement disposées de part et d'autre du plan équatorial du pneumatique, de manière à former un motif en V, la pointe du motif en V (ou encore motif en chevron) étant destinée à entrer la première dans l'aire de contact avec le sol. Les barrettes présentent généralement une symétrie par rapport au plan équatorial du pneumatique, avec le plus souvent un décalage circonférentiel entre les deux rangées de barrettes, obtenu par une rotation autour de l'axe du pneumatique d'une moitié de la bande de roulement par rapport à l'autre moitié de la bande de roulement.

Un pneumatique pour véhicule agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique pour véhicule agricole doit présenter un compromis de performances entre, de façon non exhaustive, la traction en champ sur sol meuble, la résistance aux arrachements, la résistance à l'usure sur route, la résistance à l'avancement, le confort vibratoire sur route.

Lorsque l'usage routier du véhicule agricole devient prépondérant, avec une distance parcourue sur route représentant, par exemple, jusqu'à 80% de la distance totale parcourue, sur route et en champ, les performances routières du pneumatique deviennent primordiales. Le pneumatique, initialement conçu dans un but d'efficacité en champ, doit également avoir des performances routières élevées, en particulier en termes d'efficacité énergétique et de durée de vie en usure. Par efficacité énergétique, on entend une contribution significative à l'économie de carburant du véhicule, grâce à une résistance à l'avancement, et en particulier une résistance au roulement, limitée. Concernant l'usure sur route, le pneumatique doit permettre la réalisation d'un kilométrage sur route élevé, grâce à une vitesse d'usure pas trop rapide et à des formes d'usure de sa bande de roulement maîtrisées.

Toutefois, la recherche d'un compromis optimal en usage routier, entre la résistance au roulement et la durée de vie en usure, ne doit pas entrainer une dégradation de l'adhérence en freinage sur route qui doit rester à un niveau compatible avec les exigences de sécurité requises, en garantissant une distance de freinage aussi courte que possible. En effet, il est connu que l'amélioration simultanée de la résistance au roulement, de la durée de vie en usure et de l'adhérence est complexe. Ainsi, pour réduire la résistance au roulement, la diminution de l'hystérèse des matériaux caoutchouteux constitutifs de la bande de roulement, c'est-à-dire la diminution de leur capacité à dissiper de la chaleur, est efficace, mais, en contrepartie, elle diminue l'adhérence en freinage. De même l'augmentation du volume à user de matériau caoutchouteux de la bande de roulement permet d'augmenter la durée de vie en usure, mais au risque d'augmenter de la résistance au roulement.

En outre, la recherche du compromis de performances en usage routier précédemment décrit ne doit pas non plus conduire à une dégradation des performances en champ, telles que la capacité de traction et la flottation, c'est-à-dire l'aptitude à ne pas s'enfoncer profondément dans la terre.

Les documents WO 00/13923 A1 et WO 2020/201028 A1 divulguent des pneumatiques pour véhicule agricole de l'art antérieur.

Par conséquent les inventeurs se sont donnés pour objectif de proposer un compromis optimal entre la résistance au roulement et la durée de vie en usure d'un pneumatique pour véhicule agricole, en usage routier, sans dégrader ni l'adhérence en freinage sur route, ni les performances essentielles en champ telles que la capacité de traction et la flottation.

Ce but a été atteint selon l'invention par un pneumatique pour véhicule agricole comprenant une bande de roulement ayant une largeur axiale et constituée par des blocs, deux à deux séparés par des creux et agencés, dans la largeur de la bande de roulement, selon une rangée médiane, deux rangées intermédiaires et deux rangées latérales,
- les creux étant soit des creux transversaux, formant, avec une direction circonférentielle du pneumatique, un angle au moins égal à 60°, soit des creux circonférentiels, formant, avec la direction circonférentielle, un angle au plus égal à 30°,
- la rangée médiane étant centrée sur un plan circonférentiel médian du pneumatique, les deux rangées intermédiaires étant axialement positionnées de part et d'autre de la rangée médiane et séparées de celle-ci par des creux circonférentiels, et les deux rangées latérales étant respectivement axialement positionnées à l'extérieur d'une rangée intermédiaire et séparées de celle-ci par un creux circonférentiel,
- chaque rangée respectivement médiane, intermédiaire et latérale étant constituée par une distribution circonférentielle de blocs deux à deux séparés par des creux transversaux et ayant chacun une hauteur radiale moyenne, une longueur circonférentielle moyenne et un élancement circonférentiel moyen défini comme le rapport entre la hauteur radiale moyenne et la longueur circonférentielle moyenne du bloc,
- les blocs d'une même rangée latérale s'étendant axialement vers l'extérieur dans le prolongement des blocs de la rangée intermédiaire adjacente, de telle sorte que tout ensemble de deux blocs respectivement de rangée latérale et de rangée intermédiaire, dans le prolongement l'un de l'autre, forme une barrette,
- deux blocs consécutifs de la rangée médiane étant séparés par un creux transversal ayant une largeur au plus égale à 2.5 mm,
- l'élancement circonférentiel moyen de tout bloc de la rangée médiane étant au moins égal à 0.95 et au plus égal à 1.15,
- tout bloc de chaque rangée intermédiaire comprenant une face d'attaque, selon le sens circonférentiel de roulage du pneumatique, formant, avec une direction radiale du pneumatique, un angle moyen au moins égal à 30°,
- et l'élancement circonférentiel moyen de tout bloc de chaque rangée latérale est au plus égal à 0.9.

La bande de roulement d'un pneumatique selon l'invention comprend des éléments de sculpture qui ne sont pas des barrettes traditionnelles, s'étendant axialement à partir d'une zone médiane de la bande de roulement jusqu'à ses extrémités axiales ou épaules, mais des blocs répartis dans la largeur de la bande de roulement.

Ces blocs sont agencés selon cinq rangées circonférentielles : une rangée médiane, deux rangées intermédiaires, axialement positionnées de part et d'autre de la rangée médiane, et deux rangées latérales, respectivement axialement positionnées à l'extérieur d'une rangée intermédiaire. Toutefois l'agencement des blocs respectifs d'une rangée latérale et de la rangée intermédiaire voisine constitue un système de barrettes partielles.

Tout bloc comprend une face de contact, positionnée dans la surface de roulement et destinée à entrer totalement en contact avec le sol, une face d'attaque, coupant la surface de roulement et dont l'arête d'intersection avec celle-ci est destinée à entrer en contact en premier avec le sol, une face de fuite, coupant la surface de roulement et dont l'arête d'intersection avec celle-ci est destinée à entrer en contact en dernier avec le sol, et deux faces latérales. Les faces respectivement d'attaque et de fuite, non nécessairement contenues dans un plan, sont généralement caractérisées par l'angle moyen qu'elle forme avec une direction radiale du pneumatique.

Tout bloc peut être caractérisé géométriquement par une hauteur radiale H selon une direction radiale, une largeur axiale A selon une direction axiale et une longueur circonférentielle B selon une direction circonférentielle. Ces trois dimensions H, A et B sont des valeurs moyennes mesurées sur le bloc. Généralement la largeur axiale et la longueur circonférentielle varient sur la hauteur de l'élément de sculpture : elles peuvent, par exemple, diminuer à partir de la surface portante en fond de creux jusqu'à la surface de roulement, du fait de l'inclinaison de faces du bloc. Dans le cas d'un pneumatique radial pour roue motrice d'un tracteur agricole, la hauteur radiale H est généralement au moins égale à 50 mm et le plus souvent au moins égale à 60 mm. A partir de ces trois dimensions H, A et B, peuvent être définis, pour un bloc donné, un élancement circonférentiel H/B, un élancement axial H/A et un rapport de forme surfacique B/A conditionnant les rigidités de l'élément de sculpture.

Les rangées circonférentielles de blocs sont deux à deux séparées par des creux circonférentiels. Un creux circonférentiel, dans un sens large, forme, avec la direction circonférentielle, un angle au plus égal à 30°. En d'autres termes sa ligne moyenne forme un angle moyen, par rapport à la direction circonférentielle du pneumatique, qui n'est pas nul, mais compris dans la plage de valeurs [0° ; 30°]. Sa ligne moyenne forme une plus petite inclinaison par rapport à la direction circonférentielle que par rapport à la direction axiale. Le creux n'est donc pas strictement circonférentiel, mais globalement circonférentiel.

Les blocs d'une même rangée circonférentielle sont deux à deux séparés par des creux transversaux. Un creux transversal, dans un sens large, forme, avec la direction circonférentielle, un angle au moins égal à 60°. En d'autres termes sa ligne moyenne forme un angle moyen, par rapport à la direction circonférentielle du pneumatique, qui n'est pas nul, mais compris dans la plage de valeurs [60° ; 90°]. Sa ligne moyenne forme une plus grande inclinaison par rapport à la direction circonférentielle que par rapport à la direction axiale. Le creux n'est donc pas strictement transversal, mais globalement transversal.

Un creux est délimité par les deux parois des blocs qu'il sépare. Lorsque les blocs se déforment lors de leur passage dans l'aire de contact du pneumatique avec le sol en roulage, ces parois ont tendance à se rapprocher et le creux qu'elles délimitent à se refermer. Ces déformations dépendent des sollicitations mécaniques appliquées au pneumatique en roulage, celles-ci étant elles-mêmes fonctions des conditions d'usage du pneumatique. Les conditions d'usage (charge, vitesse, pression) d'un pneumatique pour véhicule agricole sont définies dans des normes, telles que, par exemple, la norme « ETRTO » ou « European Tyre and Rim Technical Organisation » (Organisation Technique Européenne du Pneu et de la Jante) dans son « Standards Manual-2019 » (Manuel de normes 2019), dans la section consacrée aux « Agricultural equipment tyres » (Pneumatiques pour équipements agricoles). Lorsqu'un pneumatique est utilisé dans ces conditions d'usage recommandées par les normes, les parois de blocs délimitant un creux peuvent ou non venir en contact l'une avec l'autre au moins en partie, c'est-à-dire que le creux peut ou non se refermer. Lorsqu'il n'y a pas d'entrée en contact des parois, le creux est appelé rainure. Lorsqu'il y a une entrée en contact au moins partiel des parois, le creux est appelé incision.

Un creux est généralement caractérisé géométriquement par une largeur et une profondeur. La largeur d'un creux est mesurée perpendiculairement à la surface moyenne du creux, positionnée à égale distance des parois délimitant le creux, et au niveau de la surface de roulement, ou éventuellement au voisinage de celle-ci en cas de présence de chanfreins sur les blocs en vis-à-vis. La profondeur du creux est mesurée perpendiculairement à la surface de roulement, entre la surface débouchante et le fond du creux.

Selon une première caractéristique essentielle de l'invention, deux blocs consécutifs de la rangée médiane sont séparés par un creux transversal ayant une largeur au plus égale à 2.5 mm.

En d'autres termes, un creux transversal de rangée médiane est une incision, susceptible de se fermer au moins partiellement lors de son passage dans l'aire de contact.

Il en résulte que la rangée médiane, constituée de blocs séparés par des incisions, constitue une nervure quasi continue incisée périodiquement, ce qui est favorable vis-à-vis des performances d'usure et de résistance au roulement en usage routier. Du fait de la faible épaisseur des creux transversaux médians, le volume de matériau caoutchouteux de la partie médiane, destiné à être usé par abrasion, est élevé, ce qui est favorable à la durée de vie vis-à-vis de l'usure. De plus, la surface de matériau caoutchouteux de la partie médiane, destinée à entrer en contact avec le sol, est également élevée, ce qui diminue les pressions de contact au sol, et donc l'abrasion, et par conséquent l'usure. La présence d'incisions facilite la mise à plat de la rangée médiane de blocs selon la direction circonférentielle, ce qui, d'une part, limite les glissements des blocs sur le sol, et par conséquent l'usure, et d'autre part limite la déformation du matériau caoutchouteux et donc leur dissipation énergétique, ce qui diminue la résistance au roulement. En outre la fermeture des creux transversaux médians dans l'aire de contact entraine une compacité de la rangée médiane de blocs, c'est-à-dire une entrée en contact des blocs les uns avec les autres, ce qui permet une diminution des déformations des blocs médians par effet de Poisson et en cisaillement. Il en résulte une moindre dissipation énergétique du matériau caoutchouteux dans les blocs de la rangée médiane, ce qui diminue la résistance au roulement.

En outre, dans le cas d'un usage en champ, la limitation des pressions de contact, maximales au centre de la bande de roulement, évite un tassement important du sol, ce qui permet de le préserver.

Selon une deuxième caractéristique essentielle de l'invention, l'élancement circonférentiel moyen de tout bloc de la rangée médiane est au moins égal à 0.95 et au plus égal à 1.15.

Un élancement circonférentiel d'un bloc de rangée médiane proche de 1 est considéré comme optimal vis-à-vis du compromis, pour la rangée médiane, entre sa mise à plat circonférentielle, pour l'usure et la résistance au roulement, et le niveau de glissement obtenu dans l'aire de contact, pour le freinage sur une route mouillée.

Selon une troisième caractéristique essentielle de l'invention, tout bloc de chaque rangée intermédiaire comprend une face d'attaque, selon le sens circonférentiel de roulage du pneumatique, formant, avec une direction radiale du pneumatique, un angle moyen au moins égal à 30°.

Un angle moyen de face d'attaque de bloc de rangée intermédiaire, au moins égal à 30°, permet d'avoir un bloc intermédiaire avec un volume de matériau élevé et une forte rigidité circonférentielle. Un volume de matériau élevé permet de garantir une durée de vie en usure satisfaisante. Une forte rigidité circonférentielle limite les glissements du bloc de rangée intermédiaire dans l'aire de contact, et donc l'abrasion, et par conséquent l'usure. En outre les déformations circonférentielles du bloc de rangée intermédiaire, par effets de Poisson et en cisaillement, sont également limitées. Il en résulte une moindre dissipation énergétique du matériau caoutchouteux dans les blocs de rangée intermédiaire, ce qui diminue la résistance au roulement.

En usage en champ, un angle moyen de face d'attaque de bloc de rangée intermédiaire, au moins égal à 30°, donc élevé, permet d'augmenter la cohésion du sol devant et sous le bloc, ce qui permet de développer un effort de traction plus important.

Selon une quatrième caractéristique essentielle de l'invention, l'élancement circonférentiel moyen de tout bloc de chaque rangée latérale est au plus égal à 0.9.

Par rapport à un élancement circonférentiel voisin de 1 pour un pneu à barrettes de l'état de la technique, la réduction de l'élancement circonférentiel moyen de tout bloc de chaque rangée latérale est réalisée par une augmentation de la longueur circonférentielle du bloc, ce qui permet d'avoir un volume de matériau à user important, favorable à l'usure, et une forte rigidité circonférentielle. Un volume de matériau élevé permet de garantir une durée de vie en usure satisfaisante. Une forte rigidité circonférentielle limite les glissements du bloc de rangée intermédiaire dans l'aire de contact, et donc l'abrasion, et par conséquent l'usure. En outre les déformations circonférentielles du bloc de rangée intermédiaire, par effets de Poisson et en cisaillement, sont également limitées. Il en résulte une moindre dissipation énergétique du matériau caoutchouteux dans les blocs de rangée intermédiaire, ce qui diminue la résistance au roulement.

Préférentiellement la rangée médiane a une largeur axiale au moins égale à 15% et au plus égale à 25% de la largeur axiale de la bande de roulement.

La largeur axiale de la rangée médiane doit être suffisante, pour que les avantages techniques recherchés vis-à-vis de l'usure et de la résistance au roulement, en usage routier, soit significatifs, mais pas trop élevée pour que la fonction de traction en champ puisse être assurée correctement.

Avantageusement la rangée médiane a un taux de creux volumique local au plus égal à 20%.

La proportion de creux d'une bande est, de façon usuelle, quantifiée par un taux de creux volumique global, défini comme le ratio entre le volume de creux et le volume total de la bande de roulement supposée sans creux correspondant au volume géométrique délimité par la surface portante et la surface de roulement. Le taux de creux volumique global est également appelé taux d'entaillement volumique global. La surface de roulement variant avec l'usure de la bande de roulement, le taux de creux volumique global est généralement, mais pas obligatoirement, variable avec le niveau d'usure. Ainsi, le taux de creux volumique global peut être défini pour un état neuf ou pour un état d'usure donné. A titre d'exemple, un pneumatique pour roue motrice de tracteur agricole à l'état neuf a un taux de creux volumique global généralement au moins égal à 50% et souvent au moins égal à 60%. Dans ce qui suit, l'expression « taux de creux volumique global » signifie implicitement « taux de creux volumique global à l'état neuf ».

On peut également définir un taux de creux volumique local pour toute portion de bande de roulement, s'étendant circonférentiellement sur toute la circonférence du pneumatique et s'étendant axialement à partir d'un premier plan circonférentiel jusqu'à un deuxième plan circonférentiel, la distance entre ces deux plans circonférentiels représentant la largeur axiale, appelée plus simplement largeur, de la portion de bande de roulement. Le taux de creux volumique local est défini comme le ratio entre le volume de creux et le volume total de la portion de bande de roulement supposée sans creux, correspondant au volume géométrique délimité par la surface portante, la surface de roulement et les deux plans circonférentiels. Le taux de creux volumique local est également appelé taux d'entaillement volumique local. Comme le taux de creux volumique global, le taux de creux volumique local peut être défini pour un état neuf ou pour un état d'usure donné. Dans ce qui suit, l'expression « taux de creux volumique local » signifie implicitement « taux de creux volumique local à l'état neuf ».

Un taux de creux volumique local au plus égal à 20%, pour la rangée médiane, garantit un impact favorable significatif sur les performances en usure et en résistance au roulement, en usage routier.

Avantageusement tout creux transversal séparant deux blocs consécutifs de la rangée médiane forme, avec la direction circonférentielle, un angle au moins égal à 70°.

La mise en plat circonférentielle de la rangée médiane est facilitée par un angle de creux transversal aussi proche que possible de la direction axiale, c'est-à-dire aussi proche que possible de 90°. Les inventeurs ont constaté qu'une valeur d'angle de 70° était une valeur minimale pour l'efficacité de cette mise à plat.

Encore avantageusement tout creux transversal séparant deux blocs consécutifs de la rangée médiane a une profondeur au moins égale à 50%, de préférence au moins égale à 70%, de la hauteur radiale moyenne de bloc.

En dessous de 50% de la hauteur radiale moyenne de bloc, la profondeur de creux transversal de rangée médiane est insuffisante pour garantir un effet de charnière permettant la mise à plat circonférentielle de la rangée médiane avec un impact significatif sur la résistance au roulement.

Selon un mode de réalisation particulier avantageux tout creux transversal séparant deux blocs consécutifs de la rangée médiane est prolongé radialement vers l'intérieur par une cavité.

La présence d'une cavité, le plus souvent sphérique, en fond de creux transversal, permet de réduire le risque d'une initiation de fissure à partir du fond de creux, en évitant une concentration de contraintes. De plus, lorsque le niveau d'usure atteint le fond de creux, en fin de vie, la cavité forme alors deux arêtes, ce qui contribue au maintien d'une adhérence minimale sur route mouillée.

Avantageusement chaque rangée intermédiaire a une largeur axiale au moins égale à 15% et au plus égale à 25% de la largeur axiale de la bande de roulement.

Cette plage de valeurs de largeur axiale de chaque rangée intermédiaire garantit une traction en champ efficace, sur une portion significative de la bande de roulement.

Encore avantageusement chaque rangée intermédiaire a un taux de creux volumique local au moins égal à 40%, de préférence au moins égal à 55%.

Une valeur minimale de 40% pour le taux de creux volumique local de rangée intermédiaire est nécessaire à une traction en champ efficace.

Encore avantageusement l'élancement circonférentiel moyen de tout bloc respectivement de chaque rangée intermédiaire est au moins égal à 0.5 et au plus égal à 1.

Un élancement circonférentiel moyen de tout bloc de rangée intermédiaire dans la plage de valeurs [0.5; 1], combiné à un angle moyen de face d'attaque dudit bloc au moins égal à 30°, permet d'obtenir une rigidité circonférentielle du bloc optimale vis-à-vis du compromis entre les performances routières d'usure et de résistance au roulement et de traction en champ.

Préférentiellement tout bloc d'une rangée intermédiaire comprend une face d'attaque formant, avec une direction radiale du pneumatique, un angle moyen au moins égal à 35°.

Plus l'angle moyen de face d'attaque d'un bloc de rangée intermédiaire est élevé, plus la cohésion du sol, en usage en champ, est renforcée devant et sous le bloc : ce qui permet de développer un effort de traction en champ encore plus important.

Avantageusement chaque rangée latérale a une largeur axiale au moins égale à 15% et au plus égale à 25% de la largeur axiale de la bande de roulement.

Encore avantageusement chaque rangée latérale a un taux de creux volumique local au moins égal à 40%, de préférence au moins égal à 55%.

La combinaison d'une rangée latérale ayant une largeur axiale et un taux de creux volumique local dans les plages de valeurs précédemment définies, et d'une rangée intermédiaire telle que précédemment décrite, constitue un système de barrettes partielles efficace vis-à-vis de la traction en champ.

Avantageusement l'élancement circonférentiel moyen de tout bloc respectivement de chaque rangée latérale est au plus égal à 0.8.

Avantageusement l'élancement circonférentiel moyen de tout bloc respectivement de chaque rangée latérale est au moins égal à 0.6.

Un élancement circonférentiel moyen de tout bloc de rangée latérale dans la plage de valeurs [0.6 ; 0.8] permet d'obtenir une rigidité circonférentielle du bloc optimale vis-à-vis du compromis entre les performances routières d'usure et de résistance au roulement et les performances en champ de traction et d'évacuation de la terre.

Encore avantageusement tout bloc d'une rangée latérale comprend une face d'attaque formant, avec une direction radiale du pneumatique, un angle moyen au moins égale à 10° et au plus égal à 30°.

Au-delà d'une valeur de 30° pour l'angle moyen de face d'attaque, les largeurs de creux transversaux séparant deux blocs consécutifs de rangée latérale deviennent trop faibles pour garantir une capacité de traction et une capacité d'évacuation de la terre (ou débourrage) suffisantes. Pour compenser un risque de perte de traction en champs, une diminution de la largeur des creux transversaux peut être au moins en partie compensée par une augmentation de la profondeur des creux transversaux.

Selon un mode de réalisation particulier tout bloc d'une rangée latérale comprend une face d'attaque et une face de fuite formant, avec une direction radiale du pneumatique, des angles moyens respectifs égaux en valeur absolue. Cette configuration implique donc une symétrie des inclinaisons des faces d'attaque et de fuite d'un bloc de rangée latérale.

Préférentiellement chaque rangée intermédiaire et latérale comprend au moins 26 blocs.

Encore préférentiellement chaque rangée intermédiaire et latérale comprend au plus 32 blocs.

Le choix du nombre de blocs répartis circonférentiellement, pour toute rangée latérale ou intermédiaire, résulte d'un compromis entre l'usure sur route, dépendant du volume de matériau à user et de la surface de matériau dans le contact avec le sol, et le bruit et le confort vibratoire sur route, dépendant en particulier du pas séparant deux blocs consécutifs d'une même rangée.

La présente invention sera mieux comprise à l'aide des figures 1 à 6 décrites ci-après :
- Figure 1 : Vue en perspective d'un pneumatique selon l'invention,
- Figure 2 : Vue de face d'un pneumatique selon l'invention,
- Figure 3 : Vue en coupe méridienne d'une bande de roulement d'un pneumatique selon l'invention,
- Figure 4 : Vue en coupe circonférentielle d'une portion de rangée médiane d'une bande de roulement d'un pneumatique selon l'invention,
- Figure 5 : Vue en coupe circonférentielle d'une portion de rangée intermédiaire d'une bande de roulement d'un pneumatique selon l'invention,
- Figure 6 : Vue en coupe circonférentielle d'une portion de rangée latérale d'une bande de roulement d'un pneumatique selon l'invention.

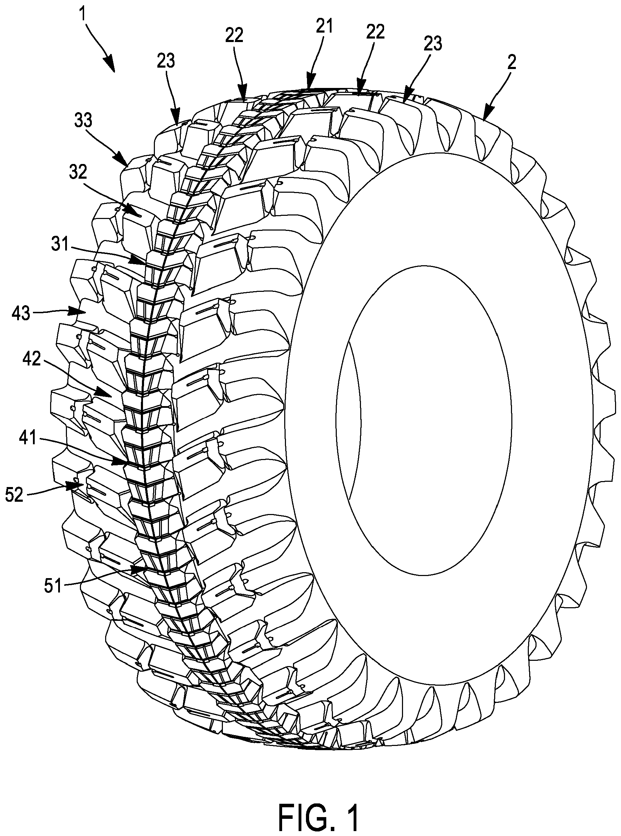

La figure 1 est une vue en perspective d'un pneumatique selon l'invention. Le pneumatique 1 pour véhicule agricole comprend une bande de roulement 2 constituée par des blocs (31, 32, 33), deux à deux séparés par des creux (41, 42, 43, 51, 52) et agencés, dans la largeur de la bande de roulement 2, selon une rangée médiane 21, deux rangées intermédiaires 22 et deux rangées latérales 23. Les creux (41, 42, 43, 51, 52) sont soit des creux transversaux (41, 42, 43), soit des creux circonférentiels (51, 52).

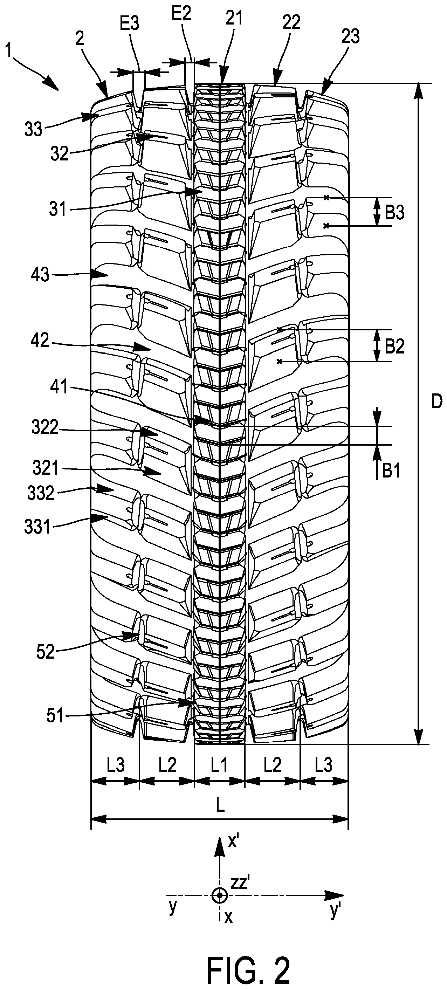

La figure 2 est une vue de face d'un pneumatique selon l'invention. Le pneumatique 1 pour véhicule agricole, ayant un diamètre extérieur D dans un état non monté sur jante et non gonflé, comprend une bande de roulement 2 ayant une largeur axiale L, selon une direction axiale YY', et constituée par des blocs (31, 32, 33), deux à deux séparés par des creux (41, 42, 43, 51, 52) et agencés, dans la largeur de la bande de roulement 2, selon une rangée médiane 21, deux rangées intermédiaires 22 et deux rangées latérales 23. Les creux (41, 42, 43, 51, 52) sont soit des creux transversaux (41, 42, 43), formant, avec une direction circonférentielle XX' du pneumatique 1, un angle au moins égal à 60°, soit des creux circonférentiels (51, 52), formant, avec la direction circonférentielle XX', un angle au plus égal à 30°. La rangée médiane 21, ayant une largeur axiale L1, est centrée sur un plan circonférentiel médian E du pneumatique. Les deux rangées intermédiaires 22, ayant chacune une largeur axiale L2, sont axialement positionnées de part et d'autre de la rangée médiane 21 et séparées de celle-ci par des creux circonférentiels 51, ayant chacun une largeur E2. Les deux rangées latérales 23, ayant chacune une largeur axiale L3, sont respectivement axialement positionnées à l'extérieur d'une rangée intermédiaire 22 et séparées de celle-ci par un creux circonférentiel 52, ayant une largeur E3. Chaque rangée respectivement médiane 21, intermédiaire 22 et latérale 23 est constituée par une distribution circonférentielle de blocs (31, 32, 33) deux à deux séparés par des creux transversaux (41, 42, 43) et ayant chacun une longueur circonférentielle moyenne (B1, B2, B3). La longueur circonférentielle B1 d'un bloc 31 de rangée médiane 21 est la distance circonférentielle mesurée entre les deux creux transversaux 41, de type incisions, le délimitant. La longueur circonférentielle B2 d'un bloc 32 de rangée intermédiaire 22 est la distance circonférentielle moyenne mesurée entre une face d'attaque 321 et une face de fuite 322 dudit bloc 32. La longueur circonférentielle B3 d'un bloc 33 de rangée latérale 23 est la distance circonférentielle moyenne mesurée entre une face d'attaque 331 et une face de fuite 332 dudit bloc 33. Les blocs 33 d'une même rangée latérale 23, s'étendent axialement vers l'extérieur dans le prolongement des blocs 32 de la rangée intermédiaire 22 adjacente, de telle sorte que tout ensemble de deux blocs (33, 32) respectivement de rangée latérale 23 et de rangée intermédiaire 22, dans le prolongement l'un de l'autre, forme une barrette.

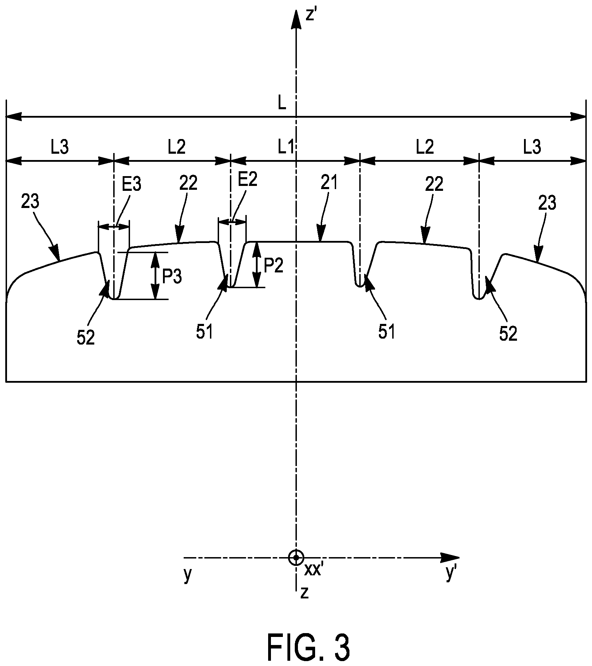

La figure 3 est une vue en coupe méridienne d'une bande de roulement d'un pneumatique selon l'invention. La bande de roulement a une largeur axiale L et se décompose en une rangée médiane 21 ayant une largeur axiale L1, deux rangées intermédiaires 22 ayant chacune une largeur axiale L2 et deux rangées latérales 23 ayant chacune une largeur axiale L3. Chaque rangée intermédiaire 22 est respectivement séparée de la rangée médiane 21 par un creux circonférentiel 51 ayant une largeur E2 et une profondeur P2, et de la rangée latérale 23 la plus proche par un creux circonférentiel 52 ayant une largeur E3 et une profondeur P3.

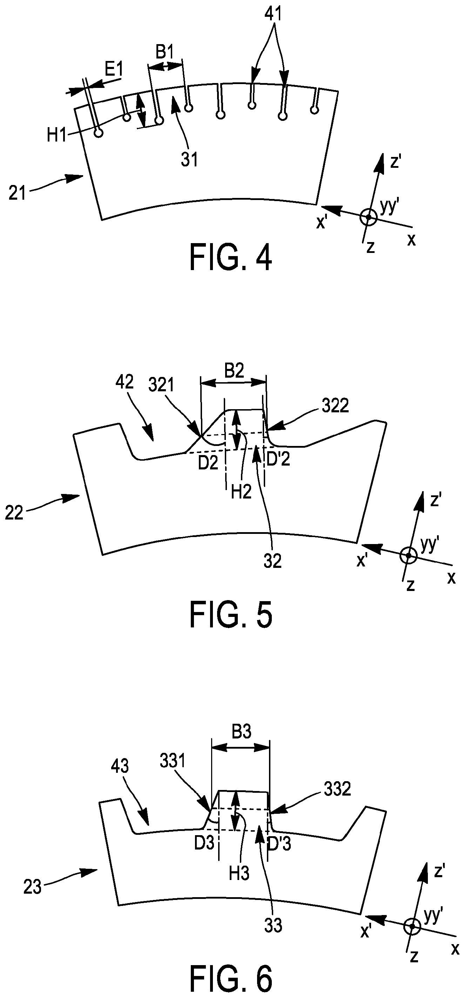

La figure 4 est une vue en coupe circonférentielle, selon un plan XZ, d'une portion de rangée médiane 21 d'une bande de roulement d'un pneumatique selon l'invention. La rangée médiane 21 est constituée par une distribution circonférentielle de blocs 31, ayant chacun une longueur circonférentielle B1 et une hauteur H1. Les blocs 31 sont deux à deux séparés par des creux transversaux 41, de type incisions, ayant une largeur E1. Selon l'invention, deux blocs 31 consécutifs de la rangée médiane 21 sont séparés par un creux transversal 41 ayant une largeur E1 au plus égale à 2.5 mm. Dans le mode de réalisation représenté, il y a une alternance d'incisions transversales 41 ayant respectivement une profondeur H1 et une profondeur inférieure H1. Ce choix permet de faciliter la fabrication du pneumatique, en réduisant l'effort nécessaire au démoulage du pneumatique après cuisson grâce une moindre profondeur d'une partie des incisions transversales.

La figure 5 est une vue en coupe circonférentielle, selon un plan XZ, d'une portion de rangée intermédiaire 22 d'une bande de roulement d'un pneumatique selon l'invention. La rangée intermédiaire 22 est constituée par une distribution circonférentielle de blocs 32, ayant chacun une longueur circonférentielle B2, distance moyenne mesurée entre une face d'attaque 321 et une face de fuite 322, et une hauteur H2. Les blocs 32 sont deux à deux séparés par des creux transversaux 42, de type rainures. Selon l'invention, tout bloc 32 de chaque rangée intermédiaire 22 comprend une face d'attaque 321, selon le sens circonférentiel de roulage du pneumatique, formant, avec une direction radiale ZZ' du pneumatique, un angle moyen D2 au moins égal à 30°, et une face de fuite 322 formant, avec la direction radiale ZZ' du pneumatique, un angle moyen D'2.

La figure 6 est une vue en coupe circonférentielle, selon un plan XZ, d'une portion de rangée latérale 23 d'une bande de roulement d'un pneumatique selon l'invention. La rangée latérale 23 est constituée par une distribution circonférentielle de blocs 33, ayant chacun une longueur circonférentielle B3, distance moyenne mesurée entre une face d'attaque 331 et une face de fuite 332, et une hauteur H3. Les blocs 33 sont deux à deux séparés par des creux transversaux 43, de type rainures. Selon l'invention, l'élancement circonférentiel moyen de tout bloc 33 de chaque rangée latérale 23 est au plus égal à 0.9. En outre tout bloc 33 de chaque rangée latérale 23 comprend une face d'attaque 331, selon le sens circonférentiel de roulage du pneumatique, formant, avec une direction radiale ZZ' du pneumatique, un angle moyen D3 au moins égal à 10° et au plus égal à 30°, et une face de fuite 332 formant, avec la direction radiale ZZ' du pneumatique, un angle moyen D'3.

L'invention a été plus particulièrement étudiée pour un pneumatique agricole de dimension 600/70 R 30.

Le tableau 1 ci-dessous présente les caractéristiques techniques d'un exemple d'un mode de réalisation préféré de l'invention, tel que représenté sur les figures 1 à 6 :

**Tableau 1**

| **Caractéristiques géométriques** | **Valeurs** | **Commentaires** |
|---|---|---|
| Largeur axiale L de la bande de roulement 2 | 606 mm | |
| Diamètre extérieur D du pneumatique | 1609 mm | Mesuré sur le pneumatique non monté sur jante et non gonflé |
| Largeur axiale L1 de la rangée médiane 21 | 124 mm | 124/606=20% de L => Comprise entre 15% et 25% de L |
| Largeur axiale L2 de chaque rangée intermédiaire 22 | 115 mm | 115/606=19% de L => Comprise entre 15% et 25% de L |
| Largeur axiale L3 de chaque rangée latérale 23 | 104 mm | 115/606=19% de L => Comprise entre 15% et 25% de L |
| Taux de creux volumique global de la bande de roulement 2 | 53% | |
| Taux de creux volumique local de la rangée médiane 21 | 11% | Inférieur à 20% |
| Taux de creux volumique local de chaque rangée intermédiaire 22 | 64% | Supérieur à 55% |
| Taux de creux volumique local de chaque rangée latérale 23 | 63% | Supérieur à 55% |
| Hauteur radiale moyenne H1 d'un bloc 31 de rangée médiane 21 | 48 mm | |
| Longueur circonférentielle moyenne B1 d'un bloc 31 de rangée médiane 21 | 43 mm | |
| Elancement circonférentiel H1/B1 d'un bloc 31 de rangée médiane 21 | 1.12 | Compris entre 0.95 et 1.15 |
| Largeur E1 de creux transversal 41 entre deux blocs consécutifs 31 de rangée médiane 21 | 1.6 mm | Inférieur à 2.5 mm => Incision |
| Profondeur de creux transversal 41 entre deux blocs consécutifs 31 de rangée médiane 21 | 48 mm | Egale à la hauteur H1 du bloc |
| Profondeur d'incision transversale secondaire 411 dans un bloc 31 de rangée médiane 21 | 31 | Egale à 70% de la hauteur H1 du bloc |
| Angle moyen de creux transversal 41 entre deux blocs consécutifs 31 de rangée médiane, par rapport à la direction circonférentielle XX4 | 75° | Supérieur à 60° |
| Hauteur radiale moyenne H2 d'un bloc 32 de rangée intermédiaire 22 | 46 mm | |
| Longueur circonférentielle moyenne B2 d'un bloc 32 de rangée intermédiaire 22 | 71 mm | |
| Elancement circonférentiel H2/B2 d'un bloc 32 de rangée intermédiaire 22 | 0.65 | Compris entre 0.5 et 1 |
| Angle moyen D2 de face d'attaque 321 de bloc 32 de rangée intermédiaire 22 | Entre 34° et 45° | Supérieur à 30° |
| Angle moyen de creux transversal 42 entre deux blocs consécutifs 32 de rangée intermédiaire 22, par rapport à la direction circonférentielle | 67° | Supérieur à 60° |
| Hauteur radiale moyenne H3 d'un bloc 33 de rangée latérale 23 | 46 mm | |
| Longueur circonférentielle moyenne B3 d'un bloc 33 de rangée latérale 23 | 64 mm | |
| Elancement circonférentiel H3/B3 d'un bloc 33 de rangée latérale 23 | 0.72 | Inférieur à 0.9, et même compris entre 0.6 et 0.8 |
| Angle moyen D3 de face d'attaque 331 d'un bloc 33 de rangée latérale 23 | Entre 20° et 28° | Supérieur à 10° et inférieur à 30° |
| Angle moyen de creux transversal 43 entre deux blocs consécutifs 33 de rangée latérale 23 | 75° | Supérieur à 60° |
| Nombre de blocs N d'une rangée intermédiaire 22 ou latérale 23 (sur toute la circonférence du pneumatique) | 28 | Compris entre 26 et 32 |
| Largeur E2 de creux circonférentiel intermédiaire 51 | 131 mm | Au niveau de la surface de roulement à l'état neuf |
| Profondeur P2 de creux circonférentiel intermédiaire 51 | 46 mm | |
| Largeur E3 de creux circonférentiel latéral 52 | 121.5 mm | Au niveau de la surface de roulement à l'état neuf |
| Profondeur P3 de creux circonférentiel latéral 52 | 46 mm | |

Les inventeurs ont comparé, sur des simulations numériques et/ou sur tests internes, les performances de l'invention et celles d'un pneumatique de référence 600/70 R 30 Michelin MACHXBIB. La résistance au roulement, en usage routier, pour un pneumatique soumis à une charge Z = 3801 Kg, gonflé à une pression P = 1.8 bar et roulant à une vitesse V = 15 km/h, est passée de 14.8 kg/t, pour le pneumatique de référence, à 11.6 kg/t pour le pneumatique selon l'invention, soit une réduction de 21%. La durée de vie en usure, définie comme le kilométrage parcouru sur route avant retrait du pneumatique à usure complète, pour le pneumatique selon l'invention, est 20% supérieure à celle du pneumatique de référence.

## Revendications

1. Pneumatique (1) pour véhicule agricole comprenant une bande de roulement (2) ayant une largeur axiale (L) et constituée par des blocs (31, 32, 33), deux à deux séparés par des creux (41, 42, 43, 51, 52) et agencés, dans la largeur de la bande de roulement (2), selon une rangée médiane (21), deux rangées intermédiaires (22) et deux rangées latérales (23),
- les creux (41, 42, 43, 51, 52) étant soit des creux transversaux (41, 42, 43), formant, avec une direction circonférentielle (XX') du pneumatique (1), un angle au moins égal à 60°, soit des creux circonférentiels (51, 52), formant, avec la direction circonférentielle (XX'), un angle au plus égal à 30°,
- la rangée médiane (21) étant centrée sur un plan circonférentiel médian (E) du pneumatique, les deux rangées intermédiaires (22) étant axialement positionnées de part et d'autre de la rangée médiane (21) et séparées de celle-ci par des creux circonférentiels (51), et les deux rangées latérales (23) étant respectivement axialement positionnées à l'extérieur d'une rangée intermédiaire (22) et séparées de celle-ci par un creux circonférentiel (52),
- chaque rangée respectivement médiane (21), intermédiaire (22) et latérale (23) étant constituée par une distribution circonférentielle de blocs (31, 32, 33) deux à deux séparés par des creux transversaux (41, 42, 43) et ayant chacun une hauteur radiale moyenne (H1, H2, H3), une longueur circonférentielle moyenne (B1, B2, B3) et un élancement circonférentiel moyen défini comme le rapport entre la hauteur radiale moyenne et la longueur circonférentielle moyenne du bloc,
- les blocs (33) d'une même rangée latérale (23) s'étendant axialement vers l'extérieur dans le prolongement des blocs (32) de la rangée intermédiaire (22) adjacente, de telle sorte que tout ensemble de deux blocs (33, 32) respectivement de rangée latérale (23) et de rangée intermédiaire (22), dans le prolongement l'un de l'autre, forme une barrette, l'élancement circonférentiel moyen de tout bloc (33) de chaque rangée latérale (23) étant au plus égal à 0.9,
**caractérisé en ce que** deux blocs (31) consécutifs de la rangée médiane (21) sont séparés par un creux transversal (41) ayant une largeur (E1) au plus égale à 2.5 mm, **en ce que** l'élancement circonférentiel moyen de tout bloc (31) de la rangée médiane (21) est au moins égal à 0.95 et au plus égal à 1.15, et
**en ce que** tout bloc (32) de chaque rangée
intermédiaire (22) comprend une face d'attaque (321), selon le sens circonférentiel de roulage du pneumatique, formant, avec une direction radiale (ZZ') du pneumatique, un angle moyen (D2) au moins égal à 30°,

2. Pneumatique (1) selon la revendication 1 **dans lequel** la rangée médiane (21) a une largeur axiale (L1) au moins égale à 15% et au plus égale à 25% de la largeur axiale (L) de la bande de roulement (2).

3. Pneumatique (1) selon l'une des revendications 1 ou 2 **dans lequel** la rangée médiane (21) a un taux de creux volumique local au plus égal à 20%.

4. Pneumatique (1) selon l'une quelconque des revendications 1 à 3 **dans lequel** tout creux transversal (41) séparant deux blocs (31) consécutifs de la rangée médiane (21) forme, avec la direction circonférentielle (XX'), un angle au moins égal à 70°.

5. Pneumatique (1) selon l'une quelconque des revendications 1 à 4 **dans lequel** tout creux transversal (41) séparant deux blocs (31) consécutifs de la rangée médiane (21) a une profondeur (P1) au moins égale à 50%, de préférence au moins égale à 70%, de la hauteur radiale moyenne (H1) de bloc (31).

6. Pneumatique (1) selon l'une quelconque des revendications 1 à 5 **dans lequel** tout creux transversal (41) séparant deux blocs (31) consécutifs de la rangée médiane (21) est prolongé radialement vers l'intérieur par une cavité (411).

7. Pneumatique (1) selon l'une quelconque des revendications 1 à 6 **dans lequel** chaque rangée intermédiaire (22) a une largeur axiale (L2) au moins égale à 15% et au plus égale à 25% de la largeur axiale (L) de la bande de roulement (2).

8. Pneumatique (1) selon l'une quelconque des revendications 1 à 7 **dans lequel** chaque rangée intermédiaire (22) a un taux de creux volumique local au moins égal à 40%, de préférence au moins égal à 55%.

9. Pneumatique (1) selon l'une quelconque des revendications 1 à 8 **dans lequel** l'élancement circonférentiel moyen de tout bloc (32) respectivement de chaque rangée intermédiaire (22) est au moins égal à 0.5 et au plus égal à 1.0.

10. Pneumatique (1) selon l'une quelconque des revendications 1 à 9 **dans lequel** tout bloc (32) d'une rangée intermédiaire (22) comprend une face d'attaque (321) formant, avec une direction radiale (ZZ') du pneumatique, un angle moyen (D2) au moins égal à 35°.

11. Pneumatique (1) selon l'une quelconque des revendications 1 à 10 **dans lequel** chaque rangée latérale (23) a une largeur axiale (L3) au moins égale à 15% et au plus égale à 25% de la largeur axiale (L) de la bande de roulement (2).

12. Pneumatique (1) selon l'une quelconque des revendications 1 à 11 **dans lequel** chaque rangée latérale (23) a un taux de creux volumique local au moins égal à 40%, de préférence au moins égal à 55%.

13. Pneumatique (1) selon l'une quelconque des revendications 1 à 12 **dans lequel** l'élancement circonférentiel moyen de tout bloc (33) respectivement de chaque rangée latérale (23) est au plus égal à 0.8.

14. Pneumatique (1) selon l'une quelconque des revendications 1 à 13 **dans lequel** l'élancement circonférentiel moyen de tout bloc (33) respectivement de chaque rangée latérale (23) est au moins égal à 0.6.

15. Pneumatique (1) selon l'une quelconque des revendications 1 à 14 **dans lequel** tout bloc (33) d'une rangée latérale (23) comprend une face d'attaque (331) formant, avec une direction radiale (ZZ') du pneumatique, un angle moyen (D3) au moins égal à 10° et au plus égal à 30°.

16. Pneumatique (1) selon l'une quelconque des revendications 1 à 15 **dans lequel** tout bloc (33) d'une rangée latérale (23) comprend une face d'attaque (331) et une face de fuite (332) formant, avec une direction radiale (ZZ') du pneumatique, des angles moyens (D3, D'3) respectifs égaux en valeur absolue.

17. Pneumatique (1) selon l'une quelconque des revendications 1 à 16 **dans lequel** la distribution circonférentielle de blocs (31, 32, 33) de chaque rangée intermédiaire (22) et latérale (23) comprend au moins 26 blocs.

18. Pneumatique (1) selon l'une quelconque des revendications 1 à 17 **dans lequel** la distribution circonférentielle de blocs (31, 32, 33) de chaque rangée intermédiaire (22) et latérale (23) comprend au plus 32 blocs.

## Patentansprüche

1. Reifen (1) für ein landwirtschaftliches Fahrzeug, der eine Lauffläche (2) beinhaltet, die eine axiale Breite (L) aufweist und aus Blöcken (31, 32, 33) besteht, die jeweils paarweise durch Hohlräume (41, 42, 43, 51, 52) getrennt sind und in der Breite der Lauffläche (2) gemäß einer mittleren Reihe (21), zwei Zwischenreihen (22) und zwei seitlichen Reihen (23) eingerichtet sind,
- wobei die Hohlräume (41, 42, 43, 51, 52) entweder Querhohlräume (41, 42, 43), die mit einer Umfangsrichtung (XX') des Reifens (1) einen Winkel von mindestens 60° bilden, oder Umfangshohlräume (51, 52), die mit der Umfangsrichtung (XX') einen Winkel von höchstens 30° bilden, sind,
- wobei die mittlere Reihe (21) auf eine Umfangsmittelebene (E) des Reifens zentriert ist, die zwei Zwischenreihen (22) axial zu beiden Seiten der mittleren Reihe (21) positioniert und von dieser durch Umfangshohlräume (51) getrennt sind und die zwei seitlichen Reihen (23) jeweils axial auf der Außenseite einer Zwischenreihe (22) positioniert und von dieser durch einen Umfangshohlraum (52) getrennt sind,
- wobei jede mittlere (21), Zwischen- (22) bzw. seitliche (23) Reihe aus einer Umfangsverteilung von Blöcken (31, 32, 33) besteht, die jeweils paarweise durch Querhohlräume (41, 42, 43) getrennt sind und jeweils eine mittlere radiale Höhe (H1, H2, H3), eine mittlere Umfangslänge (B1, B2, B3) und einen mittleren Schlankheitsgrad in Umfangsrichtung, der als das Verhältnis zwischen der mittleren radialen Höhe und der mittleren Umfangslänge des Blocks definiert ist, aufweisen,
- wobei sich die Blöcke (33) einer gleichen seitlichen Reihe (23) in der Verlängerung der Blöcke (32) der benachbarten Zwischenreihe (22) axial nach außen erstrecken, sodass jede Anordnung von zwei Blöcken (33, 32) jeweils einer seitlichen Reihe (23) und einer Zwischenreihe (22) in der gegenseitigen Verlängerung einen Stollen bildet, wobei der mittlere Schlankheitsgrad in Umfangsrichtung jedes Blocks (33) jeder seitlichen Reihe (23) höchstens 0,9 beträgt, **dadurch gekennzeichnet, dass** zwei aufeinanderfolgende Blöcke (31) der mittleren Reihe (21) durch einen Querhohlraum (41) getrennt sind, der eine Breite (E1) von höchstens 2,5 mm aufweist, dass der mittlere Schlankheitsgrad in Umfangsrichtung jedes Blocks (31) der mittleren Reihe (21) mindestens 0,95 und höchstens 1,15 beträgt und dass jeder Block (32) jeder Zwischenreihe (22) eine Vorderfläche (321) gemäß der Rollumfangsrichtung des Reifens beinhaltet, die mit einer radialen Richtung (ZZ') des Reifens einen mittleren Winkel (D2) von mindestens 30° bildet.

2. Reifen (1) nach Anspruch 1, wobei die mittlere Reihe (21) eine axiale Breite (L1) von mindestens 15 % und höchstens 25 % der axialen Breite (L) der Lauffläche (2) aufweist.

3. Reifen (1) nach einem der Ansprüche 1 oder 2, wobei die mittlere Reihe (21) einen lokalen volumenbezogenen Hohlraumanteil von höchstens 20 % aufweist.

4. Reifen (1) nach einem der Ansprüche 1 bis 3, wobei jeder Querhohlraum (41), der zwei aufeinanderfolgende Blöcke (31) der mittleren Reihe (21) trennt, mit der Umfangsrichtung (XX') einen Winkel von mindestens 70° bildet.

5. Reifen (1) nach einem der Ansprüche 1 bis 4, wobei jeder Querhohlraum (41), der zwei aufeinanderfolgende Blöcke (31) der mittleren Reihe (21) trennt, eine Tiefe (P1) von mindestens 50 %, vorzugsweise mindestens 70 %, der mittleren radialen Höhe (H1) eines Blocks (31) aufweist.

6. Reifen (1) nach einem der Ansprüche 1 bis 5, wobei jeder Querhohlraum (41), der zwei aufeinanderfolgende Blöcke (31) der mittleren Reihe (21) trennt, durch eine Aushöhlung (411) radial nach innen verlängert ist.

7. Reifen (1) nach einem der Ansprüche 1 bis 6, wobei jede Zwischenreihe (22) eine axiale Breite (L2) von mindestens 15 % und höchstens 25 % der axialen Breite (L) der Lauffläche (2) aufweist.

8. Reifen (1) nach einem der Ansprüche 1 bis 7, wobei jede Zwischenreihe (22) einen lokalen volumenbezogenen Hohlraumanteil von mindestens 40 %, vorzugsweise mindestens 55 %, aufweist.

9. Reifen (1) nach einem der Ansprüche 1 bis 8, wobei der mittlere Schlankheitsgrad in Umfangsrichtung jedes Blocks (32) jeder jeweiligen Zwischenreihe (22) mindestens 0,5 und höchstens 1,0 beträgt.

10. Reifen (1) nach einem der Ansprüche 1 bis 9, wobei jeder Block (32) einer Zwischenreihe (22) eine Vorderfläche (321) beinhaltet, die mit einer radialen Richtung (ZZ') des Reifens einen mittleren Winkel (D2) von mindestens 35° bildet.

11. Reifen (1) nach einem der Ansprüche 1 bis 10, wobei jede seitliche Reihe (23) eine axiale Breite (L3) von mindestens 15 % und höchstens 25 % der axialen Breite (L) der Lauffläche (2) aufweist.

12. Reifen (1) nach einem der Ansprüche 1 bis 11, wobei jede seitliche Reihe (23) einen lokalen volumenbezogenen Hohlraumanteil von mindestens 40 %, vorzugsweise mindestens 55 %, aufweist.

13. Reifen (1) nach einem der Ansprüche 1 bis 12, wobei der mittlere Schlankheitsgrad in Umfangsrichtung jedes Blocks (33) jeder jeweiligen seitlichen Reihe (23) höchstens 0,8 beträgt.

14. Reifen (1) nach einem der Ansprüche 1 bis 13, wobei der mittlere Schlankheitsgrad in Umfangsrichtung jedes Blocks (33) jeder jeweiligen seitlichen Reihe (23) mindestens 0,6 beträgt.

15. Reifen (1) nach einem der Ansprüche 1 bis 14, wobei jeder Block (33) einer seitlichen Reihe (23) eine Vorderfläche (331) beinhaltet, die mit einer radialen Richtung (ZZ') des Reifens einen mittleren Winkel (D3) von mindestens 10° und höchstens 30° bildet.

16. Reifen (1) nach einem der Ansprüche 1 bis 15, wobei jeder Block (33) einer seitlichen Reihe (23) eine Vorderfläche (331) und eine Hinterfläche (332) beinhaltet, die mit einer radialen Richtung (ZZ') des Reifens jeweilige mittlere Winkel (D3, D'3) bilden, die vom Absolutwert her gleich sind.

17. Reifen (1) nach einem der Ansprüche 1 bis 16, wobei die Umfangsverteilung von Blöcken (31, 32, 33) jeder Zwischen- (22) und seitlichen (23) Reihe mindestens 26 Blöcke beinhaltet.

18. Reifen (1) nach einem der Ansprüche 1 bis 17, wobei die Umfangsverteilung von Blöcken (31, 32, 33) jeder Zwischen- (22) und seitlichen (23) Reihe höchstens 32 Blöcke beinhaltet.

## Claims

1. A tyre (1) for an agricultural vehicle, comprising a tread (2) with an axial width (L) and consisting of pairs of blocks (31, 32, 33) separated by voids (41, 42, 43, 51, 52) and arranged, over the width of the tread (2), in a median row (21), two intermediate rows (22) and two lateral rows (23),
- the voids (41, 42, 43, 51, 52) being either transverse voids (41, 42, 43) which form an angle at least equal to 60° with a circumferential direction (XX') of the tyre (1), or circumferential voids (51, 52) which form an angle at most equal to 30° with the circumferential direction (XX'),
- the median row (21) being centred on a median circumferential plane (E) of the tyre, the two intermediate rows (22) being positioned axially on either side of the median row (21) and separated therefrom by circumferential voids (51), and the two lateral rows (23) being positioned respectively axially outside an intermediate row (22) and separated therefrom by a circumferential void (52),
- each median row (21), intermediate row (22) and lateral row (23) comprising a circumferential distribution of pairs of blocks (31, 32, 33) separated by transverse voids (41, 42, 43) and each having a mean radial height (H1, H2, H3), a mean circumferential length (B1, B2, B3) and a mean circumferential slenderness ratio defined as the ratio between the mean radial height and the mean circumferential length of the block,
- the blocks (33) of a same lateral row (23) extending axially towards the outside in the extension of the blocks (32) of the adjacent intermediate row (22), such that any set of two blocks (33, 32) of the lateral row (23) and intermediate row (22) respectively, in the extension of one another, forms a lug,
- the mean circumferential slenderness of any block (33) in each lateral row (23) being at most equal to 0.9,
**characterized in that** two consecutive blocks (31) in the median row (21) are separated by a transverse void (41) with a width (E1) equal at most to 2.5 mm, **in that** the mean circumferential slenderness of any block (31) in the median row (21) is at least equal to 0.95 and at most equal to 1.15, **and in that** every block (32) of each intermediate row (22) comprises a leading face (321) in the circumferential rolling direction of the tyre which forms a mean angle (D2) equal at least to 30° with a radial direction (ZZ') of the tyre.

2. The tyre (1) as claimed in claim 1, **wherein** the median row (21) has an axial width (L1) at least equal to 15% and at most equal to 25% of the axial width (L) of the tread (2).

3. The tyre (1) as claimed in claim 1 or 2, **wherein** the median row (21) has a local volumetric void ratio at most equal to 20%.

4. The tyre (1) as claimed in any of claims 1 to 3, **wherein** every transverse void (41) separating two consecutive blocks (31) of the median row (21) forms an angle at least equal to 70° with the circumferential direction (XX').

5. The tyre (1) as claimed in any of claims 1 to 4, **wherein** every transverse void (41) separating two consecutive blocks (31) of the median row (21) has a depth (P1) at least equal to 50%, preferably at least equal to 70%, of the mean radial height (H1) of the block (31).

6. The tyre (1) as claimed in any of claims 1 to 5, **wherein** every transverse void (41) separating two consecutive blocks (31) of the median row (21) is extended radially inwardly by a cavity (411).

7. The tyre (1) as claimed in any of claims 1 to 6, **wherein** each intermediate row (22) has an axial width (L2) at least equal to 15% and at most equal to 25% of the axial width (L) of the tread (2).

8. The tyre (1) as claimed in any of claims 1 to 7, **wherein** each intermediate row (22) has a local volumetric void ratio at least equal to 40%, preferably at least equal to 55%.

9. The tyre (1) as claimed in any of claims 1 to 8, **wherein** the mean circumferential slenderness ratio of every block (32) of each intermediate row (22) is at least equal to 0.5 and at most equal to 1.0.

10. The tyre (1) as claimed in any of claims 1 to 9, **wherein** every block (32) of an intermediate row (22) comprises a leading face (321) which forms a mean angle (D2) at least equal to 35° with a radial direction (ZZ') of the tyre.

11. The tyre (1) as claimed in any of claims 1 to 10, **wherein** each lateral row (23) has an axial width (L3) at least equal to 15% and at most equal to 25% of the axial width (L) of the tread (2).

12. The tyre (1) as claimed in any of claims 1 to 11, **wherein** each lateral row (23) has a local volumetric void ratio at least equal to 40%, preferably at least equal to 55%.

13. The tyre (1) as claimed in any of claims 1 to 12, **wherein** the mean circumferential slenderness ratio of every block (33) of each lateral row (23) is at most equal to 0.8.

14. The tyre (1) as claimed in any of claims 1 to 13, **wherein** the mean circumferential slenderness ratio of every block (33) of each lateral row (23) is at least equal to 0.6.

15. The tyre (1) as claimed in any of claims 1 to 14, **wherein** every block (33) of a lateral row (23) comprises a leading face (331) which forms a mean angle (D3) at least equal to 10° and at most equal to 30° with a radial direction (ZZ') of the tyre.

16. The tyre (1) as claimed in any of claims 1 to 15, **wherein** every block (33) of a lateral row (23) comprises a leading face (331) and a trailing face (332) which form, with a radial direction (ZZ') of the tyre, mean angles (D3, D'3) which are equal in absolute values.

17. The tyre (1) as claimed in any of claims 1 to 16, **wherein** the circumferential distribution of blocks (31, 32, 33) of each intermediate row (22) and lateral row (23) comprises at least 26 blocks.

18. The tyre (1) as claimed in any of claims 1 to 17, **wherein** the circumferential distribution of blocks (31, 32, 33) of each intermediate row (22) and lateral row (23) comprises at most 32 blocks.
